# EUROPEAN PATENT APPLICATION

(11) **EP 4 246 693 A1**
(43) Date of publication of application: **20.09.2023**
(21) Application number: 22858707.7
(22) Date of filing: 16.08.2022
(51) Int. Cl.: H01M 50/317, H01M 10/04, H01M 50/193, H01M 50/186

(54) **SECONDARY BATTERY AND DEVICE INCLUDING SAME**

(30) Priority: 19.08.2021 KR 20210109148; 12.08.2022 KR 20220101288
(71) Applicant: LG Energy Solution, Ltd., Seoul 07335 (KR)
(72) Inventor: NAM, Huigyun, Daejeon 34122 (KR)
(74) Representative: Goddar, Heinz J.
(86) International application number: PCT/KR2022/012192
(87) International publication number: WO 2023/022470

(57) **Abstract**

A secondary battery according to one embodiment of the present disclosure includes an electrode assembly; a battery case that houses the electrode assembly; and a recessed part that is recessed in a direction toward the inside of the battery case from the bottom part of the battery case, wherein a gas discharge port is formed in the recessed part.

## Description

### [TECHNICAL FIELD]

### Cross Citation with Related Application(s)

This application claims the benefit of Korean Patent Application No. 10-2021-0109148 filed on August 19, 2021 and Korean Patent Application No. 10-2022-0101288 filed on August 12, 2022 in the Korean Intellectual Property Office, the contents of which are incorporated herein by reference.

The present disclosure relates to a secondary battery and a device including the same, and more particularly, to a secondary battery having improved long-term lifespan and a device including the same.

### [BACKGROUND]

Recently, the demand for portable electronic products such as notebooks, video cameras, cellular phones or the like has rapidly increased, and electric vehicles, energy storage batteries, robots, satellites or the like have been actively developed. Thereby, many studies have been conducted on the secondary battery used as its driving power source.

Depending on the shape of the battery case, a secondary battery is classified into a cylindrical battery where an electrode assembly is built into a cylindrical metal can, a prismatic battery where an electrode assembly is built into a prismatic metal can, and a pouch-type battery where an electrode assembly is built into a pouch type case formed of an aluminum laminate sheet. Among them, the cylindrical battery has an advantage that it has a relatively large capacity and is structurally stable.

The electrode assembly built into the battery case is an electricity-generating device enabling charge and discharge that has a cathode/separator/anode laminate structure, and is classified into a jelly-roll type, a stack type, and a stack/folding type. The j elly-roll type is a shape in which a cathode and an anode, each made of an active material-coated long sheet, is rolled with a separator interposed between them, the stack type is a shape in which a plurality of cathodes and a plurality of anodes each having a predetermined size are laminated in this order in a state where a separator is interposed therebetween, and a stack/folding type is a combination of a jelly-roll type and a stack type. Of these, the jelly-roll-type electrode assembly has advantages that manufacture is easy and the energy density per weight is high.

Meanwhile, the secondary battery includes, for example, a nickel cadmium battery, a nickel hydrogen battery, a nickel zinc battery, a lithium secondary battery, and the like. Among them, the lithium secondary batteries are widely used in the field of high-tech electronic devices because they have advantages, for example, hardly exhibiting memory effects in comparison with nickel-based secondary batteries and thus being freely charged and discharged, and having very low self-discharge rate, high operating voltage and high energy density per unit weight.

At this time, after an electrode assembly is housed in a battery case to configure a secondary battery, the secondary battery undergoes an activation process of being left at a high temperature and being charged/discharged multiple times, and a large amount of gas is generated inside the secondary battery by the above process. At this time, in the case of a pouch-type battery, gas can be discharged through a degas process that discharges the gas generated after the activation process, but conventional cylindrical batteries do not have a degas process, which makes it impossible to discharge the internal gas.

As a result, the conventional cylindrical battery does not immediately discharge gases generated through the activation process to the outside, which causes a problem that long-term battery lifespan is shortened.

Therefore, there is a need for a novel structure that enables the degas process of cylindrical batteries to proceed, and thus allows the internal gas to be discharged to the outside and has the effect of improving long-term lifespan.

### [DETAILED DESCRIPTION OF THE INVENTION]

### [Technical Problem]

It is an object of the present disclosure to provide a secondary battery having improved long-term lifespan and a device including the same.

However, the technical problem to be solved by embodiments of the present disclosure is not limited to the above-mentioned problems, and can be variously expanded within the scope of the technical idea included in the present disclosure.

### [Technical Solution]

According to one aspect of the present disclosure, there is provided a secondary battery comprising: an electrode assembly; a battery case that houses the electrode assembly; and a recessed part that is recessed in a direction toward the inside of the battery case from the bottom part of the battery case, wherein a gas discharge port is formed in the recessed part.

The secondary battery includes an electrode tab that is connected to the electrode assembly, wherein the recessed part is formed in a bottom part of the battery case where the electrode tab is not formed.

The secondary battery may further include a cover part that covers the gas discharge port.

The cover part is rotatable.

A gas discharge port hole is formed in the gas discharge port, and a cover part hole is formed in the cover part.

The cover part rotates so that the gas discharge port hole and the cover part hole match with each other, and an internal gas is discharged by the matched holes.

The cover part hole may be formed to be equal to or larger than the size of the gas discharge port hole.

The secondary battery according to another embodiment of the present disclosure may include a sealing member that surrounds the gas discharge port and the cover part.

The gas discharge port hole and the cover part hole are positioned so as to be spaced apart from each other, and the sealing member may be formed so as to surround the cover part.

The sealing member may include an epoxy material.

The sealing member is formed so as to fill the recessed part, and the bottom part of the battery case where the sealing member is formed may be formed of a flat surface.

The gas discharge port and the cover part may have a cylindrical shape.

According to yet another aspect of the present disclosure, there is provided a device comprising the above-mentioned secondary battery.

### [Advantageous Effects]

According to embodiments of the present disclosure, the degas process is performed after the activation process of the cylindrical battery according to the configuration of a gas discharge port and a cover part formed in a battery case, thereby capable of effectively discharging the gas inside the secondary battery. Therefore, the internal gas, which is a cause of a decrease in the long-term lifespan of the secondary battery, is discharged, thereby capable of improving the long-term lifespan of the secondary battery.

The effects of the present disclosure are not limited to the effects mentioned above and additional other effects not described above will be clearly understood from the detailed description and the appended drawings by those skilled in the art.

### [BRIEF DESCRIPTION OF THE DRAWINGS]

Fig. 1 is a cross-sectional perspective view of a secondary battery according to one embodiment of the present disclosure;
Fig. 2 is a partial cross-sectional view which enlarges and shows a section "A" of Fig. 1;
Fig. 3 is a cross-sectional view of a secondary battery according to another embodiment of the present disclosure;
Fig. 4 is a perspective view of the gas discharge port and the cover part of Figs. 2 and 3;
Fig. 5 is a cross-sectional perspective view of a secondary battery according to yet another embodiment of the present disclosure; and
Fig. 6 is a partial cross-sectional view which enlarges and shows a section "B" of Fig. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of some layers and areas are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

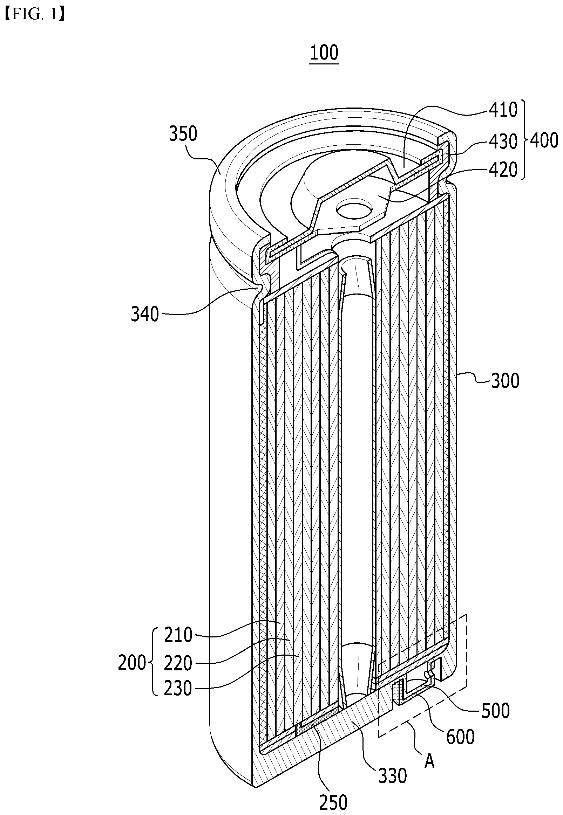

Fig. 1 is a cross-sectional perspective view of a secondary battery according to one embodiment of the present disclosure.

Referring to Fig. 1, a secondary battery 100 according to one embodiment of the present disclosure includes an electrode assembly 200 and a battery case 300 that houses the electrode assembly 200. More specifically, the electrode assembly 200 can be impregnated with an electrolyte solution and housed in the battery case 300, and a cap assembly 400 can be coupled to the opened upper part of the battery case 300 to manufacture a sealed secondary battery 100.

The electrode assembly 200 may have a jelly roll-type structure in which a long sheet-shaped cathode 210 and a long sheet-shaped anode 230 are rolled with a separator 220 interposed between them.

The cap assembly 400 includes an upper end cap 410 and a safety vent 420, wherein the upper end cap 410 is positioned on the safety vent 420 and can be electrically connected to the safety vent 420 by forming a structure in close contact with each other. The upper end cap 410 protrudes upward at the center, and is directly or indirectly connected to the cathode 210 of the electrode assembly 200 via a cathode tab and the like, and can perform the function as a cathode terminal by connecting with an external circuit.

The battery case 300 may be a cylindrical metal can including a bottom part 330, and may include a beading part 340 subjected to a beading processing and a crimping part 350 subjected to a crimp coupling.

The beading part 340 refers to a portion in which a part of the battery case 300 is recessed in a central direction of the electrode assembly 200, and is for stably coupling the cap assembly 400 and preventing the electrode assembly 200 from flowing. Here, the central direction of the electrode assembly 200 means a radial direction from the outer peripheral surface of the jelly roll-shaped electrode assembly 200 to the center thereof.

The crimping part 350 is positioned above the beading part 340 and refers to a portion surrounding the cap assembly 400, which is for stably coupling the cap assembly 400. Meanwhile, the cap assembly 400 may further include a gasket 430 for increasing sealing force. Specifically, the gasket 430 is mounted inside the crimping part 350 and the beading part 340 to increase the sealing force between the cap assembly 400 and the battery case 300. That is, the gasket 430 is positioned between the battery case 300 and the safety vent 420, and the end of the battery case 300 is bent, thereby forming the crimping part 350. Thereby, mounting of the cap assembly 400 and sealing of the secondary battery 100 can be performed.

The electrode tab 250 is connected to the electrode assembly 200, particularly, extends from the anode 230, and is connected to the bottom part 330 of the battery case 300, so that the bottom part 330 of the battery case 300 can form an anode terminal. At this time, the electrode tab 250 and the bottom part 330 may be weld-joined to each other. Particularly, the electrode tab 250 can be formed so as to deflect to one side based on the center of electrode assembly 200.

Meanwhile, in the present embodiment, the electrode tab 250 may be an anode tab, but is not limited thereto and may be a cathode tab. Also, the welding of one electrode tab 250 and the bottom part 330 is mainly described, but the electrode tab 250 may be configured in plural numbers.

Next, the gas discharge port according to the present embodiment will be described in detail with reference to Figs. 1 to 4 and the like.

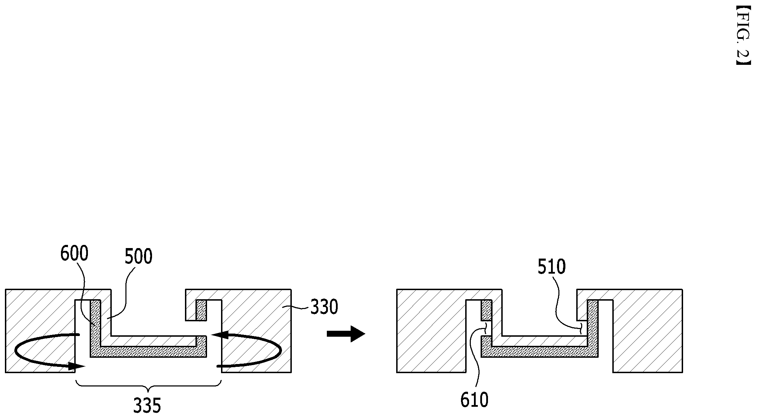

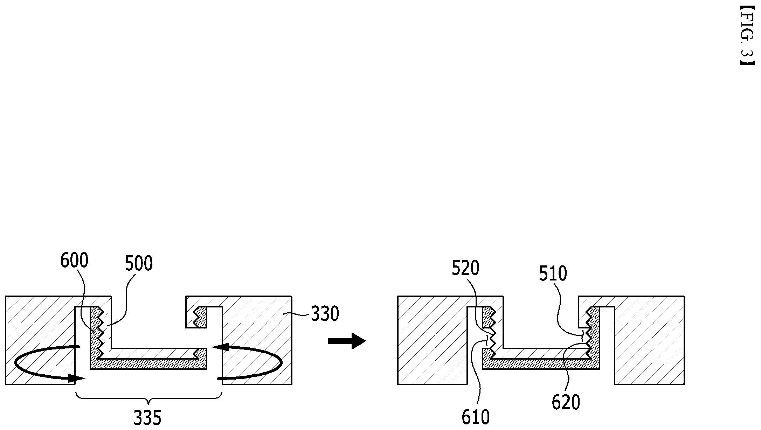

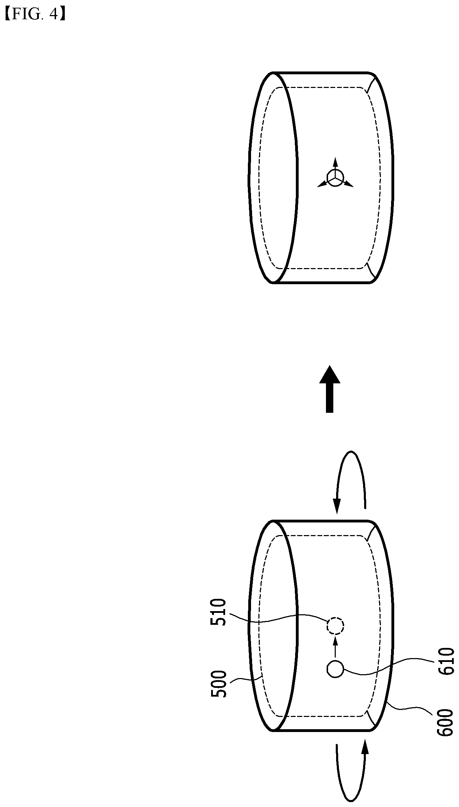

Fig. 2 is a partial cross-sectional view which enlarges and shows a section "A" of Fig. 1, which enlarges and shows a part of the bottom part 330 of the battery case 300 of Fig. 1. Fig. 3 is a cross-sectional view of a secondary battery according to another embodiment of the present disclosure. Further, Fig. 4 is a perspective view of the gas discharge port and the cover part of Figs. 2 and 3.

A conventional cylindrical battery does not have a structure capable of discharging harmful gas generated during the activation process to the outside. Therefore, it has been pointed out that a cylindrical battery in which harmful gas emission is impossible may cause a problem that lifespan is reduced. Therefore, there was a need for a new structure for introducing a degas process that enables the discharge of harmful gases generated after performing the activation process.

Therefore, referring to Fig. 1, the secondary battery 100 according to the present embodiment includes an electrode assembly 200, a battery case 300 that houses the electrode assembly 200, and a recessed part 335 that is recessed in a direction toward the inside of the battery case 300 from the bottom part 330 of the battery case 300, wherein a gas discharge port 500 is formed in the recessed part 335. At this time, the direction toward the inside of the battery case 300 means a direction toward the inside in which the electrode assembly 200 is housed with respect to the battery case 300. Therefore, it is possible to secure a gas discharge passage for performing a degas process. Further, the recessed part 335 recessed in a direction toward the inside of the battery case 300 is formed, thus enabling formation of the gas discharge port 500 that does not protrude to the outside.

Specifically, the secondary battery 100 according to the present embodiment includes an electrode tab 250 connected to the electrode assembly 200, wherein the recessed part 335 may be formed in the bottom part 330 of the battery case 300 where the electrode tab 250 is not formed. At this time, the electrode tab 250 may be connected to an anode 230, and the electrode tab 250 may be an anode tab.

Further, the recessed part 335 is formed at the above position, so that the gas discharge port 500 can also be formed on the bottom part 330 of the battery case 300 where the electrode tab 250 is not formed. In addition, the gas discharge port 500 is formed so as to be connected to the bottom part 330 of the battery case 300, thus enabling discharge of the gas formed in the battery case 300.

As described above, the recessed part 335 is formed at the bottom part of the battery case 300 where the electrode tab 250 is not formed, and the gas discharge port 500 is formed in the recessed part 335, thereby capable of minimizing the occurrence of defects during welding.

Particularly, the gas discharge port 500 is formed on the opposite side of the electrode tab 250, thereby capable of minimizing obstacles on the gas discharge path and achieving the effect of improving the efficiency of gas discharge. In addition, since the portion where the gas discharge port 500 is formed can be grasped from the appearance, so that the position of the electrode tab 250 formed inside can be inferred, thus facilitating later disassembly analysis.

The bottom part 330 may be formed to be thicker than the thickness of the side surface part of the battery case 300. By forming the thickness of the bottom part 330 to be thicker than the thickness of the side surface part of the battery case 300 as described above, a recessed part 335 that is recessed in a direction toward the inside of the battery case 300 from the bottom part 330 may be formed, and a gas discharge part 500 may be formed on the recessed part 335.

Meanwhile, referring to Figs. 2 to 4, the secondary battery 100 according to the present embodiment may further include a cover part 600 that covers the gas discharge port 500. Also, the gas discharge port 500 and the cover part 600 is formed with a hole, so that a gas discharge port hole 510 can be formed in the gas discharge port 500, and a cover part hole 610 can be formed in the cover part 600. Particularly, referring to Fig. 4, holes are formed in each of the gas discharge port 500 and the cover part 600, so that a structure for discharging internal gas can be formed.

At this time, the cover part 600 can be rotated in a state of being fitted to the gas discharge port 500, and through the rotation, the gas discharge port hole 510 and the cover part hole 610 may match with each other. That is, the gas discharge port hole 510 and the cover part hole 610 match with each other, and the internal gas can be discharged to the outside by the matched hole.

Meanwhile, as described above, since the cover part 600 is rotatable, the cover part 600 is rotated, and the gas discharge port hole 510 and the cover part hole 610 are positioned so as to be spaced apart from each other, thereby capable of interrupting the gas discharge. Fig. 2 shows that the gas discharge port hole 510 and the cover part hole 610 are positioned in opposite directions to each other, but is not limited thereto, and a structure can be included in which the gas discharge port hole 510 and the cover part hole 610 are positioned to as to be spaced apart from each other, so that the holes do not overlap. Therefore, the gas discharge port 500 can be opened and closed by rotating the cover part 600.

Moreover, in order to facilitate gas discharge by matching the gas discharge port hole 510 and the cover part hole 610 as described above, the cover part hole 610 may be formed to be equal to or larger than the size of the gas discharge port hole 510. In order to prevent the internal gas moving through the gas discharge port hole 510 from being obstructed by the external structure, the cover part hole 610 preferably has the above size, but is not limited thereto.

Meanwhile, the gas discharge port 500 and the cover part 600 may have a cylindrical shape. Specifically, the gas discharge port 500 may have a cylindrical shape having a closed lower end. In addition, the cover part 600 may have a cylindrical shape having an empty interior and a closed lower end so as to surround the gas discharge port 500, and may be a cylindrical shape having a larger volume than that of the gas discharge port 500. Therefore, the cover part 600 may be formed so as to surround the gas discharge port 500, and as an example, the cover part 600 may be closely coupled to the gas discharge port 500, but is not limited thereto.

Further, referring to Fig. 3, the secondary battery 100 according to another embodiment of the present disclosure may include screw threads 520 and 620 that are formed in the gas discharge port 500 and the cover part 600, respectively. That is, the screw thread 520 formed in the gas discharge port 500 and the screw thread 620 formed in the cover part 600 are engaged by the cover part 600, and can further strengthen a coupling force between the gas discharge port 500 and the cover part 600.

Particularly, even when the screw threads 520 and 620 of the gas discharge port 500 and the cover part 600 are coupled to each other, a structure may also be included in which the gas discharge port hole 510 and the cover part hole 610 are spaced apart from each other so that the holes do not overlap each other. Therefore, the gas discharge port 500 can be opened and closed by rotation of the cover part 600. Further, as described above, by further strengthening the coupling force or binding force between the gas discharge port 500 and the cover part 600, it is possible to seal the gas discharge port 500 after the degas process, and ensure the stability of the secondary battery.

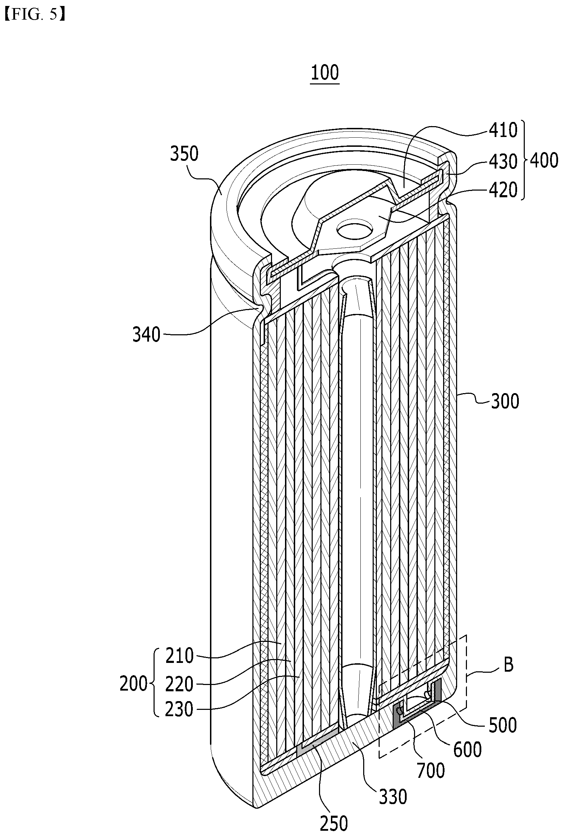

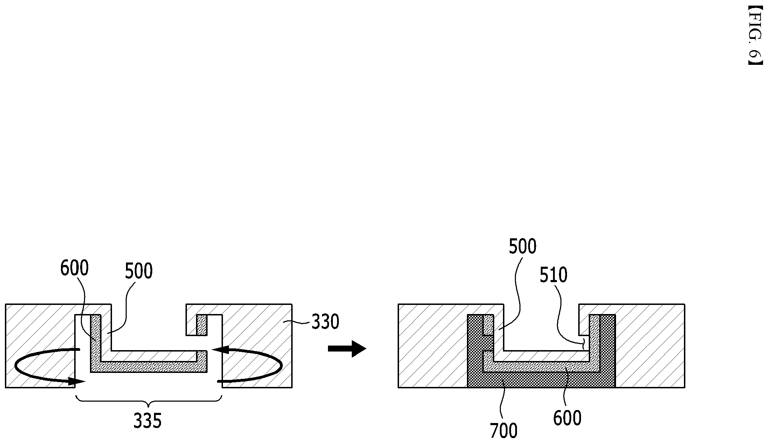

Next, referring to Figs. 5 and 6, a secondary battery according to yet another embodiment of the present disclosure will be described. Since there are contents overlapping with those described above, only contents different from those of the secondary battery according to one embodiment of the present disclosure will be described below.

Fig. 5 is a cross-sectional perspective view of a secondary battery according to yet another embodiment of the present disclosure. Fig. 6 is a partial cross-sectional view which enlarges and shows a section "B" of Fig. 5.

Referring to Figs. 5 and 6, in order to fix the gas discharge port 500 and the cover part 600, the secondary battery according to the present embodiment may further include a sealing member 700 that surrounds the gas discharge port 500 and the cover part 600.

Specifically, when additional gas discharge is no longer necessary after completion of the degas process, it is necessary to prevent the matching of the gas discharge port hole 510 and the cover part hole 610, and to prevent further rotation of the cover part 600.

Therefore, the secondary battery according to the present embodiment can be configured such that the gas discharge port hole 510 and the cover part hole 610 are positioned so as to be spaced apart from each other, and the sealing member 700 surrounds the cover part 600. In particular, the sealing member 700 can include a cover part hole 610 to surround the whole of the cover part 600.

In addition, the sealing member 700 is formed so as to fill the recessed part 335, and the bottom part 330 of the battery case 300 where the sealing member 700 is formed may be formed of a flat surface. That is, by filling the sealing member 700 in the recessed part 335, the whole of the bottom part 330 of the battery case 300 can form a flat surface, and the bottom part 330 may be formed of a flat surface. However, the sealing member 700 may also include filling only a part of the recessed part 335, and may also include a case where the bottom part 330 does not form a flat surface and has a partially recessed portion.

At this time, the material of the sealing member 700 is not limited, but may include an epoxy material. Specifically, the sealing member 700 may include one or more materials selected from epoxy and epoxy resin. The sealing member 700 formed of the above material prevents rotation of the gas discharge port 500 and the cover part 600 and fills the recessed part 335, thereby improving the stability of the secondary battery according to the present embodiment. In addition, the epoxy material, specifically the epoxy and epoxy resin material, has excellent mechanical strength, heat resistance, water resistance and electrical properties, and can completely block moisture that may be flown into the battery from the outside. In particular, through the formation of the sealing member 700 including the epoxy material, it is possible to minimize the cover part 600 being separated or spaced apart from the gas discharge port 500 due to external impact and external circumstance changes.

The terms representing directions such as the front side, the rear side, the left side, the right side, the upper side, and the lower side have been used in embodiments of the present disclosure, but the terms used are provided simply for convenience of description and may become different according to the position of an object, the position of an observer, or the like.

The secondary battery according to embodiments of the present disclosure described above can be applied to various devices. Specifically, it can be applied to vehicle means such as an electric bike, an electric vehicle, and a hybrid electric vehicle, and may be applied to various devices capable of using a secondary battery, without being limited thereto.

Although preferred embodiments of the present disclosure has been shown and described above, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

100: secondary battery
200: electrode assembly
210: cathode
220: separator
230: anode
250: electrode tab
300: battery case
330: bottom part
335: recessed part
340: beading part
350: crimping part
400: cap assembly
410: upper end cap
420: safety vent
430: gasket
500: gas discharge port
510: gas discharge port hole
600: cover part
610: cover part hole
700: sealing member

## Claims

1. A secondary battery comprising:
an electrode assembly;
a battery case that houses the electrode assembly; and
a recessed part that is recessed in a direction toward the inside of the battery case from the bottom part of the battery case,
wherein a gas discharge port is formed in the recessed part.

2. The secondary battery according to claim 1, comprising:
an electrode tab that is connected to the electrode assembly,
wherein the recessed part is formed in a bottom part of the battery case where the electrode tab is not formed.

3. The secondary battery according to claim 1, further comprising:
a cover part that covers the gas discharge port.

4. The secondary battery according to claim 3 wherein:
the cover part is rotatable.

5. The secondary battery according to claim 3 wherein:
a gas discharge port hole is formed in the gas discharge port, and
a cover part hole is formed in the cover part.

6. The secondary battery according to claim 5 wherein:
the cover part rotates so that the gas discharge port hole and the cover part hole match with each other, and
an internal gas is discharged by the matched holes.

7. The secondary battery according to claim 5 wherein:
the cover part hole is formed to be equal to or larger than the size of the gas discharge port hole.

8. The secondary battery according to claim 5, comprising:
a sealing member that surrounds the gas discharge port and the cover part.

9. The secondary battery according to claim 8 wherein:
the gas discharge port hole and the cover part hole are positioned so as to be spaced apart from each other, and
the sealing member is formed so as to surround the cover part.

10. The secondary battery according to claim 8 wherein:
the sealing member is formed so as to fill the recessed part,
the bottom part of the battery case where the sealing member is formed is formed of a flat surface.

11. The secondary battery according to claim 8 wherein:
the sealing member includes an epoxy material.

12. The secondary battery according to claim 3 wherein:
the gas discharge port and the cover part have a cylindrical shape.

13. A device comprising the secondary battery according to claim 1.
